Europäisches Patentamt

European Patent Office

Office européen des brevets

(11) Veröffentlichungsnummer: **0 128 313**
**B1**

# (12) EUROPÄISCHE PATENTSCHRIFT

(45) Veröffentlichungstag der Patentschrift:
**17.12.86**

(21) Anmeldenummer: **84104765.7**

(22) Anmeldetag: **12.03.82**

(51) Int. Cl.⁴: **A 01 G 23/04,** B 23 P 17/00

(54) **Verfahren zum Herstellen sphärisch gewölbter Spaten für ein Baumverpflanzungsgerät.**

(30) Priorität: **13.03.81 DE 3109727**

(43) Veröffentlichungstag der Anmeldung:
**19.12.84 Patentblatt 84/51**

(45) Bekanntmachung des Hinweises auf die Patenterteilung:
**17.12.86 Patentblatt 86/51**

(84) Benannte Vertragsstaaten:
**AT BE CH DE FR GB IT LI LU NL SE**

(56) Entgegenhaltungen:
**DE-A-2 902 597**
**US-A-2 549 476**

(73) Patentinhaber: **Opitz, Dieter, Waldhausstrasse 8, D-8548 Heideck (DE)**

(72) Erfinder: **Opitz, Dieter, Waldhausstrasse 8, D-8548 Heideck (DE)**

(74) Vertreter: **Wuesthoff, Franz, Dr.- Ing., Patentanwälte Wuesthoff -v. Pechmann- Behrens- Goetz Schweigerstrasse 2, D-8000 München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 128 313 B1

## Beschreibung

Baumverpflanzungsgeräte mit sphärisch gewölbten Spaten sind seit langem bekannt; beispielsweise ist in der US-A-2 549 476 in solche Gerät dargestellt und beschrieben, bei dem zwei Spaten, die je einem Viertel einer Hohlkugel entsprechen, an je einer sie umschließenden, U-förmigen Rahmenhälfte schwenkbar gelagert sind. Die beiden Rahmenhälften lassen sich zu einem ungefähr quadratischen, in Betriebsstellung waagerechten Rahmen schließen und miteinander verriegeln. Bei geschlossenem Rahmen sind die beiden Spaten zwischen einer unteren Stellung, in der sie gemeinsam einen halbkugelförmigen Kübel bilden, und einer oberen Stellung hin- und herschwenkbar. Wenn mit diesem Gerät ein Baum ausgegraben wird, wird der Rahmen um dessen Stamm herumgelegt und geschlossen, während die Spaten nach oben geschwenkt sind. Sodann wird der Rahmen nach unten gedrückt und die Spaten werden nach unten geschwenkt, wobei ihre nach unten weisenden, etwa halbkreisförmigen Kanten in den Boden eindringen, sich dabei einander nähern und schließlich aneinander anliegen, so daß die Spaten den Wurzelballen des Baums samt umgebendem Erdreich umschließen. Nun kann durch Anheben des Gerätes der Baum samt Wurzelballen aus dem Boden herausgehoben werden.

Über die Herstellung der Spaten ist der US-A-2549 476 nichts zu entnehmen; es war bisher üblich, solche Spaten einzeln herzustellen und ihre Grabkanten nötigenfalls mit Zähnen zu versehen, die das Eindringen in den Boden erleichtern. Diese Art der Herstellung ist umständlich und kostspielig, besonders bei großen Spaten, die zusammen einen Kübel mit einem Durchmesser von 2,50 m und mehr aufweisen können (DE-A-2 902 597).

Der Erfindung liegt die Aufgabe zugrunde, die Herstellung sphärisch gewölbter Spaten für Baumverpflanzungsgeräts, insbesondere solche mit großem Kübeldurchmesser, zu vereinfachen.

Die Aufgabe ist erfindungsgemäß dadurch gelöst,
- daß eine Kugelkalotte, insbesondere aus hartem Stahlblech, geformt wird,
- in die Kugelkalotte beiderseits eines Grokreises Löcher in gleichmäßigen Abständen gegeneinander versetzt gebohrt werden,
- und die Löcher durch zickzackförmige, den Großkreis kreuzende Schnitte miteinander verbunden werden.

Auf diese Weise erhält man Spaten, die in ihrem Wölbungsradius genau übereinstimmen und schon infolge ihrer Herstellung, ohne jeden zusätzlichen Arbeitsaufwand, zickzackförmige Schnittkanten aufweisen, die das Hineindrücken der Spaten in den Boden wesentlich erleichtern und, um diese Wirkung noch zu verstärken, allenfalls noch schräg geschliffen werden.

Vorzugsweise werden die Löcher auf der einen Seite des Großkreises durch eine Serie paralleler Schnitte mit je einem Loch auf der anderen Seite des Großkreises verbunden und erst dann die erstgenannten Löcher durch eine zweite Serie paralleler Schnitte im Winkel zu den erstgenannten Schnitten mit je einem weiteren Loch auf der anderen Seite des Großkreises verbunden. Dadurch wird weitgehend vermieden, daß sich die Spaten infolge von Wärmespannungen verziehen.

Ein Ausführungsbeispiel der Erfindung wird im folgenden anhand einer schematischen Zeichnung beschrieben.

Fig. A bis F zeigen aufeinanderfolgende Verfahrensstufen bei der Herstellung eines Paars Spaten.

Zum Herstellen eines Paars viertelkugelförmiger Spaten 44 und 44' wird gemäß Fig.A von einer annähernd halbkugelförmigen Kugelkalotte 50 aus Stahlblech ausgegangen. Solche Kugelkalotten werden üblicherweise als Korbböden für Reaktionsgefäße und andere Behälter verwendet; ihre Herstellung ist bekannt und braucht deshalb hier nicht beschrieben zu werden.

Auf der Kugelkalotte 50 wird, einem Großkreis 52 folgend, eine zickzackförmige Schnittkante 48, 48' aufgezeichnet, wie in Fig.B mit strichpunktierten Linien angedeutet. An den Ecken der aufgezeichneten Schnittkante 48, 48' werden auf der einen Seite des Großkreises 52 in gleichmäßigen Abständen Löcher 54 und auf der anderen Seite des Großkreises 52 Löcher 54' derart gebohrt, daß jedes Loch 54' von den beiden benachbarten Löchern 54, wie aus Fig.C ersichtlich, gleichweit entfernt ist und die Löcher 54 vom Großkreis 52 einen ebenso großen Abstand haben wie die Löcher 54'.

Anschließend wird gemäß Fig.D jedes der Löcher 54 mit einem der beiden benachbarten Löcher 54' durch einen Schnitt 56 verbunden, wobei sämtliche Schnitte 56 einander parallel sind und vorzugsweise auf je einem Gro.kreis liegen. Daraufhin werden gemäß Fig.E sämtliche Löcher 54 mit einem anderen der beiden benachbarten Löcher 54' durch je einen Schnitt 56' verbunden; auch diese Schnitte 56' sind parallel zueinander und liegen vorzugsweise auf je einem Großkreis. Die Schnitte 56 und 56' werden vorzugsweise, um die Erwärmung des Stahls gering zu halten, mit einer rotierenden Trennscheibe ausgeführt.

Durch die Schnitte 56 und 56' erhält man gemäß Fig.F die beiden annähernd viertelkugelförmigen Spaten 44 und 44' mit ihren Schnittkanten 48 und 48', die nun noch an der Innenseite der Spaten 44 und 44' angeschärft werden, was mit einer üblichen Handschleifmaschine geschehen kann.

Die Spaten 44 und 44' bestehen vorzugsweise aus hartem Stahl; besonders bewährt hat sich ein hochfester, vergüteter Feinkornbaustahl mit der DIN-Bezeichnung 17MnCrMo33. Chemische Zusammensetzung und mechanische Eigenschaften eines solchen Stahls sind bekannt aus dem von der Thyssen Aktiengesellschaft herausgegebenen Werkstoffblatt 210 vom Juni 1977. Vorzugsweise wird der dort mit der Stahlbezeichnung N-A-XTRA 70 versehene Stahl mit einer Mindeststreckgrenze von 690 N/mm² für die Spaten 44 und 44' verwendet.

Baumverpflanzungsgesäte mit erfindungsgemäß hergestellten Spaten sind Gegenstand des Europäischen Patents 0 060 537.

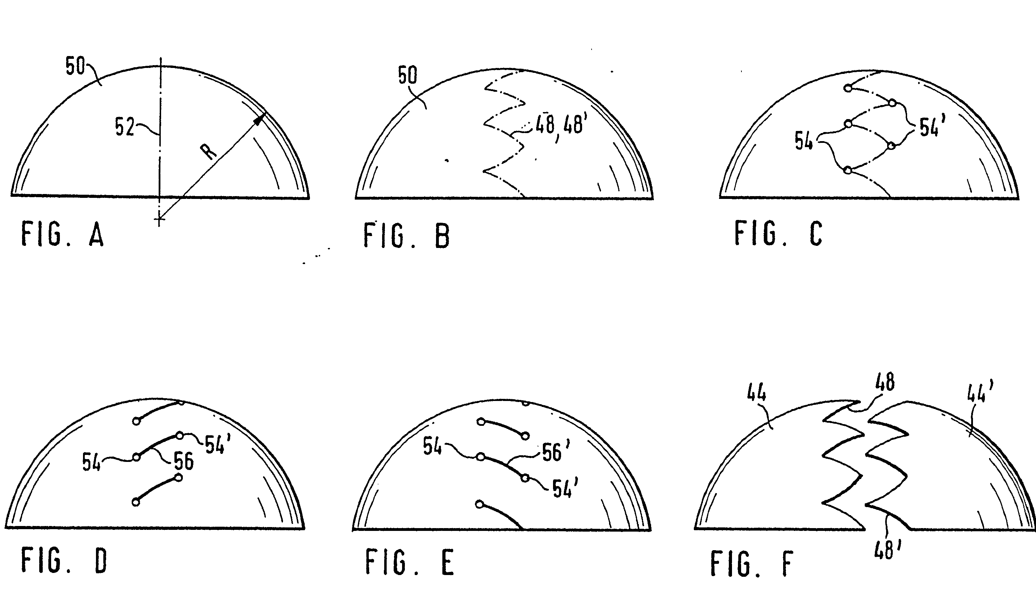

## Patentansprüche

1. Verfahren zum Herstellen sphärisch gewölbter Spaten (44, 44'), für ein Baumverpflanzungsgerät, dadurch gekennzeichnet,
- daß eine Kugelkalotte (50), insbesondere aus hartem Stahlblech, geformt wird,
- in die Kugelkalotte (50) beiderseits eines Großkreises (52) Löcher (54, 54') in gleichmäßigen Abständen gegeneinander versetzt gebohrt werden,
- und die Löcher (54, 54') durch zickzackförmige, den Großkreis (52) kreuzende Schnitte (56, 56') miteinander verbunden werden.

2. Verfahren nach Anspruch 1, dadurch gekennzeichnet, daß die Löcher (54) auf der einen Seite des Großkreises (52) durch eine Serie paralleler Schnitte (56) mit je einem Loch (54') auf der anderen Seite des Großkreises (52) verbunden werden und erst dann die erstgenannten Löcher (54) durch eine zweite Serie paralleler Schnitte (56') im Winkel zu den erstgenannten Schnitten (56) mit je einem weiteren Loch (54') auf der anderen Seite des Großkreises (52) verbunden werden.

## Claims

1. A method for manufacturing spherically formed spades (44, 44') for a tree-transplanting device, characterized in
- that a spherical cup (50) especially of hard steel sheet material is formed,
- that in the spherical cup (50) holes (54, 54') are bored at both sides of a circumferential circle (52) which are equidistant and staggered with respect to each other, - that the holes (54, 54') are connected with each other by zigzag-shaped cut (56, 56') crossing the circumferential circle (52).

2. The method as defined in claim 1 characterized in that the holes (54) are connected at the one side of the circumferential circle (52) with one hole (54'), each, at the other side of the circumferential circle (52) by a series of parallel cuts (56) and that only then the first-named holes (54) are connected with one further hole (54'), each, at the other side of the circumferential circle (52) by a second series of parallel cuts (56') extending at an angle with respect to the first-named cuts (56).

## Revendications

1. Procédé de fabrication de pelles de forme sphérique (44, 44') pour un appareil à transplanter les arbres, caractérisé
- en ce que l'on forme une calotte sphérique (50), en particulier en tôle d'acier dur,
- en ce que dans la calotte sphérique (50), des deux côtés d'un grand cercle (52), on perce des trous (54, 54') à distances réguliéres, décalés l'un par rapport à l'autre,
- et en ce que l'on réunit les trous (54, 54') entre eux par des découpes (56, 56') en forme de zigzag qui croisent le grand cercle (52).

2. Procédé selon la revendication 1, caracterise en ce aue l'on réunit chacun des trous (54) qui se trouvent d'un côté du grand cercle (52), au moyen d'une série de découpes parallèles (56) avec un trou (54') qui se trouve de l'autre côté du grand cercle (52) et ce n'est qu'alors que l'on réunit chacun des trous mentionnés en premier lieu (54), au moyen d'une seconde série de découpes parallèles (56') faisant un angle avec les découpes mentionnées en premier lieu (56), avec un autre trou (54') qui se trouve de l'autre côté du grand cercle (52).

FIG. A

FIG. B

FIG. C

FIG. D

FIG. E

FIG. F

0 128 313